# EUROPÄISCHE PATENTANMELDUNG

(11) **EP 4 345 495 A1**
(43) Veröffentlichungstag der Anmeldung: **03.04.2024**
(21) Anmeldenummer: 23199366.8
(22) Anmeldetag: 25.09.2023
(51) Int. Cl.: G01S 7/40, G01C 25/00, G01S 7/497, G01S 7/52, G01S 17/931

(54) **KALIBRIEREINHEIT ZUR AUSRICHTUNG VON FAHRZEUGUMFELDERFASSUNGSEINHEITEN EINES KRAFTFAHRZEUGS**

(30) Priorität: 30.09.2022 DE 102022125264
(71) Anmelder: TKR Spezialwerkzeuge GmbH, 58285 Gevelsberg (DE)
(72) Erfinder: Kreischer, Torsten, 58300 Wetter (DE)
(74) Vertreter: Kalkoff & Partner Patentanwälte mbB

(57) **Zusammenfassung**

Die Erfindung betrifft eine Kalibriereinheit zur Ausrichtung von Fahrzeugumfelderfassungseinheiten eines Kraftfahrzeugs, mit
- einer verschiebbar auf einem Untergrund aufstellbaren Bodeneinheit,
- einer mit der Bodeneinheit verbundenen Trageinheit und
- einem verstellbar an der Trageinheit angeordneten ersten Targetelement mit einer Reflexionsfläche.

Um eine Kalibriereinheit bereitzustellen, die flexibel und zuverlässig zur Ausrichtung unterschiedlicher Fahrzeugumfelderfassungseinheiten eines oder verschiedener Kraftfahrzeuge einsetzbar ist, ist vorgesehen, dass die Kalibriereinheit ein verstellbar an der Trageinheit und/oder dem ersten Targetelement angeordnetes zweites Targetelement mit einer Funktionsfläche zur Anzeige eines frei auf der Funktionsfläche positionierbaren Targets aufweist, wobei das zweite Targetelement zwischen einer die Reflexionsfläche überdeckenden Gebrauchsstellung und einer die Reflexionsfläche freigebenden Lagerstellung verstellbar ist.

## Beschreibung

Die Erfindung betrifft eine Kalibriereinheit zur Ausrichtung von Fahrzeugumfelderfassungseinheiten eines Kraftfahrzeugs, mit
- einer verschiebbar auf einem Untergrund aufstellbaren Bodeneinheit,
- einer mit der Bodeneinheit verbundenen Trageinheit und
- einem verstellbar an der Trageinheit angeordneten ersten Targetelement mit einer Reflexionsfläche.

Moderne Kraftfahrzeuge weisen eine Vielzahl von Fahrzeugumfelderfassungseinheiten auf. Hierbei handelt es sich um Fahrzeugsensoren, Fahrzeugkameras oder dergleichen, welche bspw. zum Betrieb von unterschiedlichen Assistenzsystemen verwendet werden, die im Betrieb des Kraftfahrzeugs den Fahrer in bestimmten Fahrsituationen unterstützen. Die von den Fahrzeugumfelderfassungseinheiten erfassten Daten werden dabei bspw. von Assistenzsystemen, wie einem Spurhalteassistenten, einem Abstandsregeltempomat, einem Spurwechselassistenten und einem Notbremsassistenten genutzt, um im Betrieb des Kraftfahrzeugs, die dem jeweiligen Assistenzsystem zugeschriebene Funktionalität zu gewährleisten. Die Fahrzeugumfelderfassungseinheiten nutzen dabei neben verschiedenen Kamerasystemen und Sensoren, wie bspw. Ultraschallsensoren auch Radar, Lidar oder dergleichen, um die nötigen Umgebungsinformationen zu ermitteln, sodass durch einen aktiven Fahrzeugeingriff auch Unfälle vermieden oder deren Folgen zumindest abgeschwächt werden können.

Voraussetzungen für die einwandfreie Funktion der Assistenzsysteme ist eine exakte Ausrichtung der jeweils durch die Assistenzsysteme genutzten Fahrzeugumfelderfassungseinheiten. Im Falle von Fehlfunktionen und insbesondere nach einem Austausch der Fahrzeugumfelderfassungseinheiten, bspw. im Rahmen einer Unfallinstandsetzung, ist es zur Gewährleistung der Funktion der Assistenzsysteme zwingend erforderlich, eine Justierung der Fahrzeugumfelderfassungseinheiten, bspw. Kameras oder Sensoren, vorzunehmen, sodass diese exakt an dem Fahrzeug ausgerichtet sind. Eine Ausrichtung erfolgt dabei derzeit üblicherweise unter Zuhilfenahme von sogenannten Targetelementen, bei denen es sich um Kalibriertafeln handelt, welche zur Einstellung der einzelnen Erfassungseinheiten exakt gegenüber dem Kraftfahrzeug ausgerichtet werden müssen. Wesentlich hierfür ist auch eine Ausrichtung des Fahrzeugs gegenüber der Kalibriereinheit, wobei hierzu temporär am Fahrzeug Positionsgeber, wie bspw. Laser, angeordnet werden, um im Werkstattbetrieb eine Ausrichtung der Kalibriereinheit gegenüber dem Fahrzeug zu gewährleisten.

Zur Ausrichtung der unterschiedlichen, an verschiedenen Positionen am Fahrzeug angeordneten Fahrzeugumfelderfassungseinheiten ist es erforderlich, nach der Positionierung des Fahrzeugs gegenüber der Kalibriereinheit das Targetelement in unterschiedlichen Positionen gegenüber dem Fahrzeug und den zu justierenden Fahrzeugumfelderfassungseinheiten anzuordnen.

Für verschiedene Fahrzeugtypen oder verschiedene Fahrzeugumfelderfassungseinheiten, z.B. Kameras und Sensoren, sowie zur Positionierung der Kalibriereinheit gegenüber dem Fahrzeug mittels der Positionsgeber sind unterschiedliche Targetelemente erforderlich. Bereits die Ausrichtung mehrerer unterschiedlicher Fahrzeugumfelderfassungseinheiten eines Fahrzeugs erfordert einen mit hohem Aufwand verbundenen Wechsel des Targetelements. Hiervon ausgehend liegt der Erfindung die Aufgabe zugrunde, eine Kalibriereinheit bereitzustellen, die flexibel und zuverlässig zur Ausrichtung unterschiedlicher Fahrzeugumfelderfassungseinheiten eines oder verschiedener Kraftfahrzeuge einsetzbar ist.

Die Erfindung löst die Aufgabe durch eine Kalibriereinheit mit den Merkmalen des Anspruchs 1. Vorteilhafte Weiterbildungen der Erfindung sind in den abhängigen Ansprüchen angegeben.

Kennzeichnend für die erfindungsgemäße Kalibriereinheit zur Ausrichtung von Fahrzeugumfelderfassungseinheiten eines Kraftfahrzeugs ist ein verstellbar an der Trageinheit und/oder dem ersten Targetelement angeordnetes zweites Targetelement mit einer Funktionsfläche zur Anzeige eines frei auf der Funktionsfläche positionierbaren Targets, wobei das zweite Targetelement zwischen einer die Reflexionsfläche überdeckenden Gebrauchsstellung und einer die Reflexionsfläche freigebenden Lagerstellung verstellbar ist.

Die erfindungsgemäße Kalibriereinheit ist zur Kalibrierung unterschiedlicher Fahrzeugumfelderfassungseinheiten, z.B. Kameras und/oder Sensoren, beispielsweise Ultraschallsensoren, Radar und/oder Lidar, eines und/oder mehrerer Fahrzeuge ausgebildet.

Die Kalibriereinheit ist vorzugsweise zur Verwendung im Werkstattbetrieb ausgebildet. Hierzu weist die erfindungsgemäße Kalibriereinheit eine auf einem Untergrund, beispielsweise einer Werkstatt oder einer Fertigungshalle, aufstellbare Bodeneinheit auf. Die Bodeneinheit ist zum Verschieben auf dem Untergrund ausgebildet. Weiter weist die Kalibriereinheit eine mit der Bodeneinheit verbundene Trageinheit, z.B. einen Träger oder eine Säule, auf.

Das erste Targetelement ist verstellbar an der Trageinheit und das zweite Targetelement ist verstellbar an der Trageinheit und/oder dem ersten Targetelement angeordnet. Unter verstellbar wird hierbei verstanden, dass das erste Targetelement und/oder das zweite Targetelement gegenüber der Trageinheit und/oder dem zweiten und/oder ersten Targetelement, beispielsweise in Längsachsenrichtung der Trageinheit verstellbar und/oder um eine oder mehrere nachstehend beschriebene Gelenkachsen schwenkbar ist.

Das erste Targetelement weist eine Reflexionsfläche, d.h. eine Oberfläche mit reflektierenden Eigenschaften auf. Unter reflektierenden Eigenschaften wird hierbei bevorzugt verstanden, dass die Reflexionsfläche geeignet ist, elektromagnetische Wellen, z.B. Licht oder Laserstrahlen, und/oder Schallwellen, beispielsweise Ultraschall gerichtet, d. h. weitestgehend ohne Streuung, insbesondere nach Art einer Spiegelfläche, zu reflektieren.

Erfindungsgemäß weist das zweite Targetelement eine Funktionsfläche zur Anzeige eines frei auf der Funktionsfläche positionierbaren Targets auf. Unter einem Target wird eine optische Abbildung auf der Funktionsfläche zur Kalibrierung von Fahrzeugumfelderfassungseinheiten, bevorzugt Kameras, verstanden. Bevorzugt weist das Target eine an die zu kalibrierende Fahrzeugumfelderfassungseinheit angepasste Form auf der Funktionsfläche auf. Hierzu ist das Target beispielsweise kreisförmig, polygonförmig oder ellipsenförmig ausgebildet. Weiter weist das Target zum Beispiel eine als Kreis, Rechteck, Kreuz oder Linie ausgebildete Form auf. Ferner weist das Target bevorzugt eine im Vergleich zu einem ersten Farbton der Funktionsfläche kontrastreichen zweiten Farbton auf. Unter kontrastreich wird hierbei verstanden, dass sich das Target für eine Fahrzeugumfelderfassungseinheit, z.B. die Frontkamera eines Fahrzeugs von der Funktionsfläche erkennbar hervorhebt. Beispielsweise weist die Funktionsfläche in dem zweiten Betriebszustand einen weißen Farbton und das Target einen schwarzen Farbton auf.

Die Verstellbarkeit der Targetelemente gegenüber der Trageinheit, beispielsweise einem Träger der Kalibriereinheit, erlaubt es, die Targetelemente in der für die Überprüfung bzw. Einstellung erforderlichen Weise auszurichten. Zum Wechsel zwischen dem ersten Targetelement und dem zweiten Targetelement für die Kalibrierung der Fahrzeugumfelderfassungseinheit ist das zweite Targetelement zwischen der Gebrauchsstellung und der Lagerstellung verstellbar. In der Gebrauchsstellung ist das zweite Targetelement derart gegenüber dem ersten Targetelement angeordnet, dass die Reflexionsfläche von dem zweiten Targetelement verdeckt wird. Hierbei wird unter verdeckt verstanden, dass die Reflexionsfläche -bezogen auf die Gebrauchslage der Kalibriereinheit- ausgehend vom Kraftfahrzeug derart fluchtend hinter dem zweiten Targetelement angeordnet ist, dass die Reflexionsfläche für eine Fahrzeugumfelderfassungseinheit nicht einsehbar ist. Das zweite Targetelement ist derart an der Trageinheit und/oder dem ersten Targetelement angeordnet, dass die Funktionsfläche in der Gebrauchsstellung von der Trageinheit und/oder dem ersten Targetelement abgewandt und/oder in der Gebrauchslage der Kalibriereinheit dem Fahrzeug zugewandt ist.

In der Lagerstellung ist das zweite Targetelement derart gegenüber dem ersten Targetelement angeordnet, dass die Reflexionsfläche freigegeben ist, d.h. dass das zweite Targetelement die Reflexionsfläche gegenüber bspw. einem Fahrzeug nicht verdeckt.

Das erste Targetelement ist derart an der Trageinheit angeordnet, dass die Reflexionsfläche von der Trageinheit abgewandt und/oder in der Gebrauchslage, in der die Kalibriereinheit senkrecht zur Fahrzeuglängsachse verschiebbar ist, beispielsweise vor der Fahrzeugfront in einem definierten Abstand angeordnet ist, dem Fahrzeug zugewandt ist.

In der Gebrauchslage erlaubt es die Kalibriereinheit, die Targetelemente quer zur Fahrzeuglängsachse gegenüber der zu überprüfenden bzw. justierenden Fahrzeugumfelderfassungseinheit zu positionieren. Hieran anschließend kann über die Verstellbarkeit der Targetelemente eine optimale Ausrichtung der Targetelemente gegenüber der zu überprüfenden, bzw. einzustellenden Fahrzeugumfelderfassungseinheit ermöglicht werden.

Das zweite Targetelement ermöglicht einen flexiblen Einsatz der Kalibriereinheit zur Ausrichtung unterschiedlicher Fahrzeugumfelderfassungseinheiten. In der Lagerstellung erlaubt das zweite Targetelement durch die Freigabe der Reflexionsfläche den Einsatz der Kalibriereinheit beispielsweise zur Positionierung der Kalibriereinheit gegenüber einem Fahrzeug und/oder zur Ausrichtung des Radars, Lidars und/oder von Ultraschallsensoren. In der Gebrauchsstellung ermöglicht das zweite Targetelement mit der zur Anzeige des Targets ausgebildeten Funktionsfläche die Ausrichtung von Kameras, z.B. der Front- und/oder Rückfahrkamera eines Fahrzeugs. Indem das Target frei auf der Funktionsfläche positionierbar ist, ist die Kalibriereinheit zur Ausrichtung unterschiedlicher Kameras eines und/oder verschiedener Fahrzeugtypen und/oder verschiedener Hersteller geeignet. Daher ist die erfindungsgemäße Kalibriereinheit flexibel und zuverlässig zur Ausrichtung unterschiedlicher Fahrzeugumfelderfassungseinheiten eines oder verschiedener Kraftfahrzeuge einsetzbar.

Nach einer vorteilhaften Weiterbildung der Erfindung ist vorgesehen, dass das zweite Targetelement zur Verstellung zwischen der Gebrauchsstellung und der Lagerstellung um eine in oder parallel zu der Längsachse der Trageinheit angeordnete Rotationsachse verschwenkbar ist. Die Längsachse der Trageinheit erstreckt sich bevorzugt -bezogen auf die Gebrauchslage der Kalibriereinheit- senkrecht zu der Bodeneinheit und/oder dem Untergrund. Die Rotationsachse ist im Abstand zu oder bevorzugt in der Längsachse der Trageinheit angeordnet. Das zweite Targetelement ist derart an der Trageinheit und/oder dem ersten Targetelement gelagert, dass das zweite Targetelement zur Verstellung zwischen der Gebrauchsstellung und der Lagerstellung um die Rotationsachse verschwenkt wird.

Beispielsweise ist das zweite Targetelement gelenkig, z.B. über mindestens ein Scharnier, mit dem ersten Targetelement verbunden und gegenüber dem ersten Targetelement um die parallel zur Längsachse angeordnete Rotationssachse verschwenkbar. Hierbei liegt das zweite Targetelement bevorzugt zumindest abschnittsweise in der Gebrauchsstellung an dem ersten Targetelement an. Indem das zweite Targetelement um die in oder parallel zu der Längsachse der Trageinheit angeordnete Rotationsachse verschwenkbar ist, wird auf vorteilhafte Weise bei einer kompakten Bauweise der Kalibriereinheit eine einfache Verstellung zwischen der Gebrauchsstellung und der Lagerstellung ermöglicht, sodass während des Kalibrierprozess ein schneller Wechsel zwischen dem ersten und dem zweiten Targetelement, bzw. der Reflexionsfläche und der Funktionsfläche gewährleistet ist.

Grundsätzlich reicht eine Verstellbarkeit des zweiten Targetelement aus, um zwischen der Reflexionsfläche und der Funktionsfläche für die Kalibrierung verschiedener Fahrzeugumfelderfassungseinheiten zu wechseln. Nach einer vorteilhaften Weiterbildung der Erfindung ist jedoch vorgesehen, dass das erste Targetelement zwischen einer der Lagerstellung des zweiten Targetelements zugeordneten Gebrauchsposition und einer der Gebrauchsstellung des zweiten Targetelements zugeordneten Lagerposition verstellbar ist. Die Targetelemente sind bevorzugt derart an der Trageinheit angeordnet, dass eine Verstellung des zweiten Targetelements zwischen der Gebrauchsstellung und der Lagerstellung eine Verstellung des ersten Targetelements zwischen der Lagerposition und der Gebrauchsposition bewirkt.

In der Lagerposition ist die Reflexionsfläche des ersten Targetelements von dem in der Gebrauchsstellung angeordneten zweiten Targetelement verdeckt, sodass die Funktionsfläche bevorzugt - bezogen auf die Gebrauchslage der Kalibriereinheit- der Fahrzeugumfelderfassungseinheit zugewandt angeordnet ist. In der Gebrauchsposition ist die Reflexionsfläche von dem in der Lagerstellung angeordneten zweiten Targetelement freigeben, sodass die Reflexionsfläche - bezogen auf die Gebrauchslage der Kalibriereinheit- der Fahrzeugumfelderfassungseinheit zugewandt angeordnet ist.

Bevorzugt sind das erste Targetelement und/oder das zweite Targetelement um die Längsachse der Trageinheit verschwenkbar. Besonders bevorzugt sind beide Targetelemente um die Längsachse der Trageinheit verschwenkbar, sodass ein Wechsel zwischen der Funktionsfläche und der Reflexionsfläche, d.h. eine Verstellung des zweiten Targetelements zwischen der Gebrauchsstellung und der Lagerstellung und/oder eine Verstellung des ersten Targetelements zwischen der Lagerposition und der Gebrauchsposition, durch ein Verschwenken und/oder Rotieren der beiden Targetelemente um die Längsachse der Trageinheit bewirkt wird. Indem die beiden Targetelemente derart miteinander in Wirkverbindung stehen, dass eine Verstellung des ersten oder zweiten Targetelements ebenfalls eine Verstellung des zweiten oder ersten Targetelements bewirkt, wird eine kompakte und dennoch robuste Bauweise der Kalibriereinheit ermöglicht, sodass die Kalibriereinheit höheren Belastungen im Werkstattbetrieb, beispielsweise bei der Verstellung auf dem Untergrund, standhält. Das vorteilhafte Verschwenken und/oder Rotieren beider Targetelemente um die Längsachse der Trageinheit erlaubt zudem eine stabilere Anordnung der Targetelemente an der Trageinheit und somit eine höhere Stabilität während der Verstellung zwischen den Stellungen und/oder den Positionen sowie während des Kalibrierprozesses.

Nach einer vorteilhaften Weiterbildung der Erfindung ist vorgesehen, dass die Trageinheit derart an der Bodeneinheit gelagert ist, dass das erste Targetelement zwischen der Lagerposition und der Gebrauchsposition und/oder das zweite Targetelement zwischen der Gebrauchsstellung und der Lagerstellung durch eine Verdrehung der Trageinheit um die Längsachse der Trageinheit verstellt werden. Die Trageinheit ist bevorzugt an einer drehbar gelagerten Bodenplatte der Bodeneinheit angeordnet. Die Bodeneinheit weist vorzugsweise einen Längsträger und einen mit diesem an einem Ende des Längsträgers verbundenen Querträger auf, wobei die Bodenplatte bevorzugt an dem Längsträger angeordnet ist. Das erste und/oder zweite Targetelement sind bevorzugt derart verstellbar an der Trageinheit angeordnet, dass die Targetelement in Richtung der Längsachse der Trageinheit verstellbar, bzw. - bezogen auf die Gebrauchslage der Kalibriereinheit- höhenverstellbar sind. Dadurch dass die Trageinheit drehbar an der Bodeneinheit gelagert ist, kann auf vorteilhafte Weise eine Verstellung der Targetelement ermöglicht werden, bei der die Targetelement besonders stabil an der Trageinheit angeordnet werden können und somit einer Fehlausrichtung der Targetelemente bei der Kalibrierung der Fahrzeugumfelderfassungseinheiten entgegengewirkt wird.

Nach einer vorteilhaften Weiterbildung der Erfindung ist vorgesehen, dass die Kalibriereinheit mindestens eine Gelenkeinheit zur Positionierung des ersten Targetelements und/oder des zweiten Targetelements gegenüber der Trageinheit aufweist. Die Gelenkeinheit ist derart ausgebildet, dass das erste Targetelement und/oder das zweite Targetelement gelenkig mit der Trageinheit verbunden sind. Die Gelenkeinheit weist beispielsweise ein erstes Anschlusselement zur Aufnahme eines Targetelements und ein mit der Trageinheit verbundenes zweites Anschlusselement auf. Die Anschlusselemente sind vorzugsweise relativ zueinander um eine erste Gelenkachse und eine zweite Gelenkachse, die senkrecht zueinander ausgerichtet sind, verschwenkbar.

Zur Ausrichtung des ersten Anschlusselements relativ gegenüber dem zweiten Anschlusselement weist die Gelenkeinheit bevorzugt eine motorisch angetriebene Antriebseinheit auf. Besonders bevorzugt weist die Antriebseinheit zwei Linearantriebe auf, die jeweils einen in seiner Längsachsenrichtung verstellbaren Kolben aufweisen. Bevorzugt ist die Antriebseinheit zur Ausrichtung der Anschlusselemente zueinander einer nachstehend beschriebenen Steuereinheit und/oder einer nachstehend beschriebenen Sende- und Empfangseinheit verbunden.

Bevorzugt weist die Kalibriereinheit zwei Gelenkeinheiten zur Positionierung des ersten und zweiten Targetelements gegenüber der Trageinheit auf. Bevorzugt ist das erste Targetelement an einer ersten Gelenkeinheit und das zweite Targetelement an einer zweiten Gelenkeinheit angeordnet. Alternativ ist das erste Targetelement an der Gelenkeinheit angeordnet und das zweite Targetelement ist verschwenkbar an dem ersten Targetelement angeordnet. Durch die Gelenkeinheit wird eine einfache und zuverlässige Positionierung der Targetelemente gegenüber der Trageinheit ermöglicht, wodurch die Ausrichtung der Targetelemente in der für die Justierung der Fahrzeugumfelderfassungseinheit erforderlichen Weise in komfortabler Weise über die Gelenkeinheit bewirkt werden kann.

Die Anordnung der Gelenkeinheit an der Trageinheit kann grundsätzlich in beliebiger Weise erfolgen. Nach einer vorteilhaften Weiterbildung der Erfindung ist vorgesehen, dass die Gelenkeinheit zur Verschwenkung des ersten Targetelements und/oder zweiten Targetelements drehgelenkig an der Trageinheit angeordnet ist. Die Gelenkeinheit ist bevorzugt derart drehgelenkig an der Trageinheit angeordnet, dass die Targetelemente zur Verstellung zwischen den Stellungen und/oder den Positionen gegenüber der Trageinheit um die Längsachse der Trageinheit verschwenkt werden.

Bevorzugt ist die Gelenkeinheit mit einem längsverstellbar an einem Träger der Trageinheit angeordneten Kopplungselement verbunden. Gemäß dieser Ausgestaltung der Erfindung weist die Kalibriereinheit einen - bezogen auf die Gebrauchsposition - sich senkrecht erstreckenden Träger auf, an dem die Gelenkeinheit bzw. das Targetelement in seiner Höhe gegenüber dem Untergrund und damit dem zu untersuchenden Fahrzeug eingestellt werden kann. Die Verwendung eines Kopplungselements erlaubt es dabei, dieses in optimaler Weise an die Trägerstruktur anzupassen, wobei das Kopplungselement dann eine einfache und komfortable Verlagerung entlang des Trägers und damit eine exakte Positionierung der Gelenkeinheit gegenüber dem Untergrund erlaubt.

Nach einer vorteilhaften Weiterbildung der Erfindung ist vorgesehen, dass das Kopplungselement derart ausgebildet ist, dass die Gelenkeinheit zur Verstellung des ersten Targetelements zwischen der Lagerposition und der Gebrauchsposition und/oder des zweiten Targetelements zwischen der Gebrauchsstellung und der Lagerstellung um die Längsachse der Trageinheit verschwenkt wird. Das Kopplungselement ist derart ausgebildet, dass die Gelenkeinheit oder Gelenkeinheiten mit den Targetelementen um die Längsachse der Trageinheit und/oder um den Träger der Trageinheit verschwenkbar sind. Hierzu weist der Träger bevorzugt einen sich entlang der Längsachse der Trageinheit erstreckenden kreisförmigen Querschnitt auf. Beispielsweise weist das Kopplungselement mehrere bei dem Verschwenken um die Längsachse der Trageinheit mit einer Mantelfläche des Trägers in Wirkverbindung befindliche Wälzelemente, z.B. Kugeln, Kegel oder Rollen, auf. Bevorzugt weist das Kopplungselement eine Blockiereinheit zur kraft- und/oder formschlüssigen Festlegung des Kopplungselements an dem Träger auf. Die Verstellung des Kopplungselements kann dabei manuell durch den Nutzer erfolgen oder aber auch durch einen separaten Antrieb, mittels dem das Kopplungselement entlang des Trägers verfahrbar ist.

Die Anzeige eines Targets reicht je nach Form und Variierung der Position auf der Funktionsfläche grundsätzlich zur Ausrichtung einer Fahrzeugumfelderfassungseinheit aus. Nach einer vorteilhaften Weiterbildung der Erfindung ist jedoch vorgesehen, dass das zweite Targetelement derart ausgebildet ist, dass die Funktionsfläche eine Mehrzahl positionierbarer Targets anzeigt. Die Targets sind bevorzugt fahrzeugtypabhängig auf der Funktionsfläche angeordnet. Dadurch, dass die Funktionsfläche zur Anzeige einer Mehrzahl von frei auf der Funktionsfläche positionierbaren Targets ausgebildet ist, kann die Kalibriereinheit besonders einfach an einen bestimmten Fahrzeugtyp angepasst werden.

Die Positionierung des Targets auf der Funktionsfläche kann grundsätzlich in beliebiger Weise, bspw. durch eine einfache Bedienung an dem zweiten Targetelement erfolgen. Nach einer vorteilhaften Weiterbildung der Erfindung ist jedoch vorgesehen, dass die Kalibriereinheit eine Sende- und Empfangseinheit zur drahtlosen Datenübertragung von Informationen an ein mobiles Handgerät aufweist. Über die Sende- und Empfangseinheit werden Informationen von der Kalibriereinheit an das mobile Handgerät übertragen. Auf dessen Anzeigeeinheit, in der Regel einem elektronischen Display, werden dann die Informationen angezeigt. Das mobile Handgerät, z.B. ein Handy, ein Laptop oder ein Tablet, ist bevorzugt zur Steuerung der Kalibriereinheit ausgebildet und/oder mit der besonders bevorzugt an der Kalibriereinheit angeordneten Steuereinheit verbunden. Die drahtlose Datenübertragung zwischen der Kalibriereinheit und dem mobilen Handgerät erfolgt dabei bspw. über ein Mobilfunknetz, Bluetooth oder über eine WLAN-Verbindung innerhalb des Werksstattbetriebes.

Eine Verstellung des ersten Targetelements und/oder des zweiten Targetelements ist bevorzugt mittels des mobilen Handgeräts steuerbar. Besonders bevorzugt erlaubt das mobile Handgerät die Einstellung der Form und Position des Targets auf der Funktionsfläche sowie ganz besonders bevorzugt die Positionierung der vorteilhaft vorgesehenen Mehrzahl von Targets. Auch besteht die Möglichkeit, über eine mit dem mobilen Handgerät verbundene Datenbank, in der fahrzeugspezifische Daten hinterlegt sind, eine automatisierte Ausrichtung der Targetelemente und/oder eine Positionierung der Targets zu erreichen. Beispielsweise sind in der Datenbank fahrzeugtypabhängige Anordnungen der Targets gespeichert, die nach Bedarf über das mobile Handgerät abrufbar sind. Bei der automatischen Ausrichtung der Targetelemente signalisiert die Anzeigeeinheit des mobilen Handgeräts dem Nutzer in optischer Weise eine korrekte Ausrichtung des Targetelements.

Indem die Kalibriereinheit eine Sende- und Empfangseinheit zur drahtlosen Datenübertragung von Informationen an ein mobiles Handgerät aufweist, kann auf vorteilhafte Weise eine einfache und schnelle Einrichtung sowie Steuerung der Kalibriereinheit über das mobile Handgerät ermöglicht werden.

Bei dem ersten Targetelement kann es sich grundsätzlich um einen beliebigen Körper handeln, welcher für die einzustellenden Sensoren eine ausreichende Reflexionsfläche zur Verfügung stellt. In einer besonders einfachen Ausgestaltung ist das erste Targetelement dazu als plattenförmiger Körper ausgebildet, dessen dem Fahrzeug zugewandte Reflexionsfläche über die Antriebseinheit in seiner Neigung gegenüber der ersten und zweiten Gelenkachse verstellbar ist. Das zur Herstellung des ersten Targetelements verwendete Material ist dabei grundsätzlich frei wählbar, wobei dieses unter Berücksichtigung der erforderlichen Reflexionseigenschaften erfolgt. Gemäß einer besonders einfachen Ausgestaltung ist das erste Targetelement z.B. aus einem metallischen Material gebildet.

Nach einer vorteilhaften Weiterbildung ist vorgesehen, dass das zweite Targetelement als Monitor ausgebildet ist, wobei der Monitor bevorzugt als LCD-, Plasma-, TFT- oder OLED-Monitor ausgebildet ist. Die Sende- und Empfangseinheit ist bevorzugt zur Einstellung des Targetelements, beispielsweise zum Wechsel des Betriebszustands mit der Steuereinheit verbunden. Die Steuereinheit ist vorzugsweise als programmierbare Einheit, z.B. als Computer gebildet. Bevorzugt weist die Kalibriereinheit mindestens ein, besonders bevorzugt mehrere Sensorelemente zur Erfassung von Sensorsignalen auf, beispielsweise der Ausrichtung der Targetelements gegenüber der Trageinheit oder der Positionierung der Kalibriereinheit gegenüber dem Fahrzeug. Das oder die Sensorelemente stehen mit der Steuereinheit und/oder der Sende- und Empfangseinheit zur Weiterleitung der erfassten Daten an das mobile Handgerät in Verbindung. Ein als Monitor ausgebildetes zweites Targetelement erlaubt die besonders einfache und flexible Einstellung der Funktionsfläche. Beispielsweise kann die Funktionsfläche als Anzeigedisplay dem Nutzer eine visuelle Anleitung zur Ausrichtung der Kalibriereinheit anzeigen und dem Nutzer zusätzlich zur Anzeigeeinheit des mobilen Handgeräts in optischer Weise die korrekte Ausrichtung des Targetelements signalisieren.

Ein Ausführungsbeispiel der Erfindung ist nachstehend mit Bezug auf die Zeichnungen erläutert. In den Zeichnungen zeigen:
- Fig. 1a: eine perspektivische Ansicht einer Kalibriereinheit mit einem in einer Gebrauchsposition angeordneten ersten Targetelement und einem in einer Lagerstellung angeordneten zweiten Targetelement;
- Fig. 1b: eine perspektivische Ansicht der Kalibriereinheit von Fig. 1a mit dem in einer Lagerposition angeordneten ersten Targetelement und dem in einer Gebrauchsstellung angeordneten zweiten Targetelement;
- Fig. 2a: eine perspektivische Ansicht einer zweiten Ausführungsform der Kalibriereinheit mit dem in der Gebrauchsposition angeordneten ersten Targetelement und dem in der Lagerstellung angeordneten zweiten Targetelement;
- Fig. 2b: eine weitere perspektivische Ansicht der Kalibriereinheit von Fig. 2a mit dem in der Lagerposition angeordneten ersten Targetelement und dem in der Gebrauchsstellung angeordneten zweiten Targetelement;
- Fig. 3a: eine perspektivische Ansicht einer dritten Ausführungsform der Kalibriereinheit mit dem in der Gebrauchsstellung angeordneten zweiten Targetelement;
- Fig.3b: eine perspektivische Ansicht der Kalibriereinheit von Fig. 3a mit dem in der Lagerstellung angeordneten zweiten Targetelement und
- Fig. 4: in einer Explosionsdarstellung eine perspektivische Ansicht eines Kopplungselements, einer Gelenkeinheit und eines Targetelements der Kalibriereinheit von Fig. 1a und Fig. 1b sowie der Kalibriereinheit von Fig.3a und 3b.

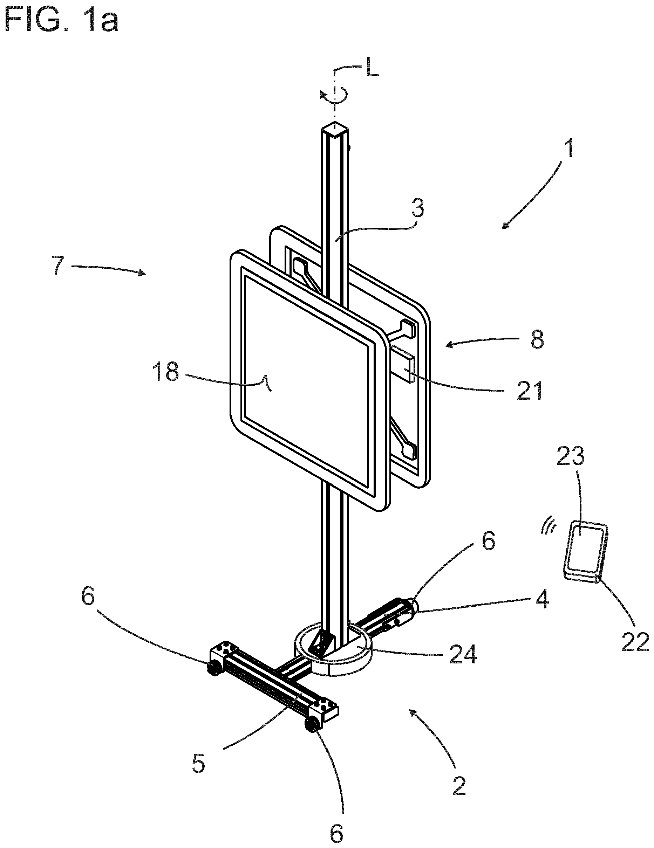

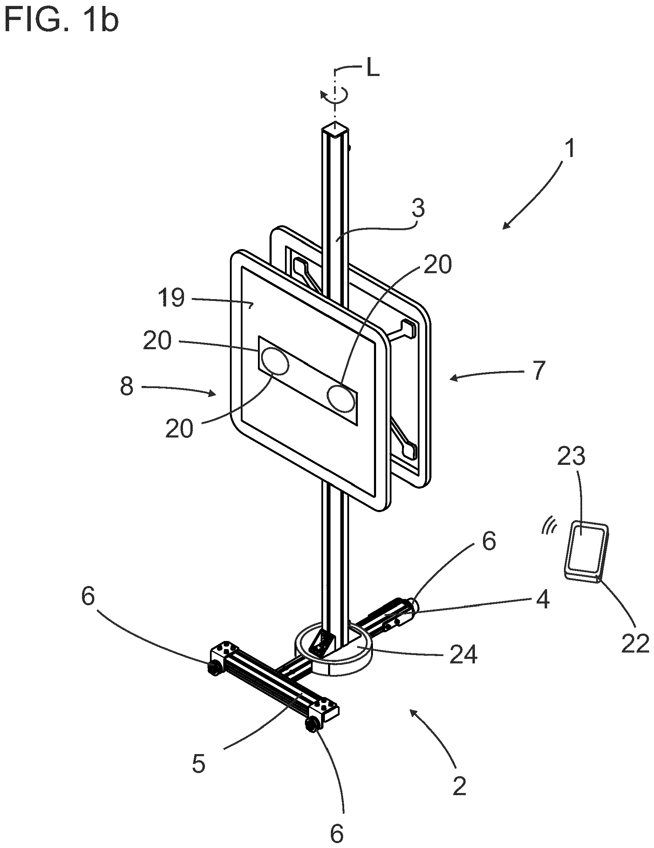

Eine Kalibriereinheit 1 mit einer Bodeneinheit 2 sowie einer sich senkrecht ausgehend von der Bodeneinheit 2 erstreckenden, eine Trageinheit bildenden Säule 3 ist in den Figuren 1a und 1b in einer perspektivischen Darstellung wiedergegeben.

Die Bodeneinheit 2 der Kalibriereinheit 1 setzt sich aus einem Längsträger 4 sowie einem Querträger 5 zusammen. An den Enden des Querträgers 5 sowie an dem dem Querträger 5 gegenüberliegenden Ende des Längsträgers 4 sind Rollen 6 angeordnet, deren Drehachsen parallel zueinander verlaufen. Die Rollen 6 ermöglichen es, die Kalibriereinheit 1 beispielsweise in einer Werkstatt an einer zur Aufnahme der Kalibriereinheit 1 vorgesehenen Schienenanordnung längsverstellbar anzuordnen. Hierdurch kann die Kalibriereinheit 1 bei einer Positionierung eines hier nicht dargestellten Kraftfahrzeugs derart, dass die Fahrzeuglängsachse senkrecht zum Schienensystem verläuft, senkrecht zur Fahrzeuglängsachse gegenüber dem Fahrzeug verschoben werden und dabei mit einem ersten Targetelement 7 und einem zweiten Targetelement 8 gegenüber den zu überprüfenden bzw. einzustellenden Fahrzeugumfelderfassungseinheiten positioniert werden kann.

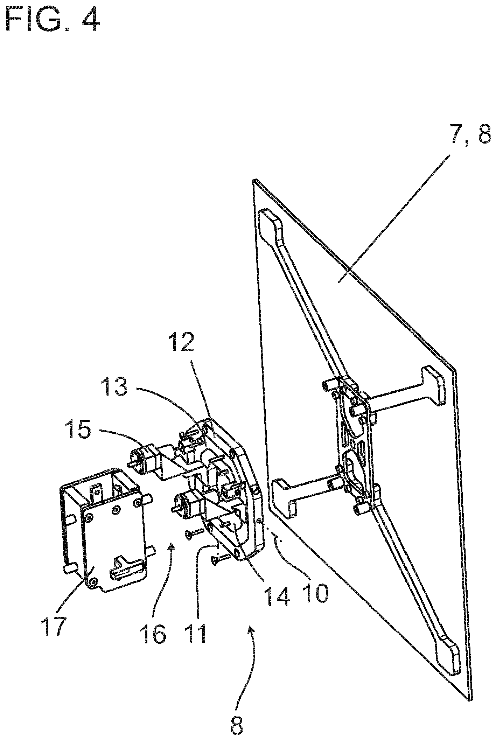

Die Targetelemente 7, 8 sind, wie in Fig. 4 dargestellt, jeweils über eine Gelenkeinheit 9 um eine - bezogen auf die in den Figuren 1a und 1b dargestellte Gebrauchsposition - erste horizontal verlaufende Gelenkachse 10 sowie eine zweite senkrecht verlaufende Gelenkachse 11 verstellbar. Die Gelenkeinheit 9 weist hierzu ein erstes Anschlusselement 12, einen Gelenkkörper 13 sowie ein zweites Anschlusselement 14 auf, die koaxial zueinander angeordnet sind und dabei eine achteckige, aneinander angepasste Form aufweisen.

Zur Erzeugung einer Verstellbewegung des ersten oder zweiten Targetelements 7, 8 um die erste Gelenkachse 10 sowie die zweite Gelenkachse 11 dient eine zwei Linearantriebe 15 aufweisende Antriebseinheit 16. Über die Gelenkeinheit 9 kann das mit dem ersten Anschlusselement 12 verbundene erste oder zweite Targetelement 7, 8 gegenüber dem mit einem Kopplungselement 17 verbundenen zweiten Anschlusselement 14 um die erste und zweite Gelenkachse 10, 11 verstellt werden.

Das erste Targetelement 7 weist eine Reflexionsfläche 18 auf (vgl. Fig.1a). Das zweite Targetelement ist als Monitor 8 ausgebildet und weist eine Funktionsfläche 19 zur Anzeige einer Mehrzahl von frei auf der Funktionsfläche 19 positionierbaren Targets 20 auf. Ferner weist die Bodeneinheit 2 eine an dem Längsträger 4 drehbar gelagerte Bodenplatte 24 zur Verdrehung der Säule 3 um eine Längsachse L der Säule 3 auf. Durch die Verdrehung der Säule 3 um ihre Längsachse L ist das erste Targetelement 7 zwischen einer in Fig. 1a dargestellten Gebrauchsposition und einer in Fig. 1b darstellten Lagerposition verstellbar. Der Monitor 8 ist hierbei zwischen einer in Fig. 1a dargestellten Lagerstellung und einer in Fig. 1b dargestellten Gebrauchsstellung verstellbar.

In der Gebrauchsposition des ersten Targetelements 7 ist die Reflexionsfläche 18 von dem in der Lagerstellung angeordneten Monitor 8 freigegeben und- bezogen auf die in Figur 1a dargestellte Gebrauchsposition - der Fahrzeugumfelderfassungseinheit zugewandt angeordnet.

In der Lagerposition des ersten Targetelements 7 ist die Reflexionsfläche 18 von dem in der Gebrauchsstellung angeordneten Monitor 8 verdeckt und die Funktionsfläche 19 - bezogen auf die in Figur 1b dargestellte Gebrauchsposition - der Fahrzeugumfelderfassungseinheit zugewandt angeordnet.

Die Kalibriereinheit 1 weist eine Steuerreinheit und eine an dem Monitor 8 angeordnete Sende- und Empfangseinheit 21 zur drahtlosen Datenübertragung von Informationen an ein mobiles Handgerät 22 auf. Über die Sende- und Empfangseinheit 21 werden Informationen von der Kalibriereinheit 1 an das mobile Handgerät 22 übertragen und auf dessen Anzeigeeinheit in Form eines elektronischen Displays 23 angezeigt. Die Sende- und Empfangseinheit 21 ist zur Einstellung des ersten Targetelements 7 und des Monitors 8 mit der Steuereinheit verbunden. Über eine mit dem mobilen Handgerät 22 verbundene Datenbank, in der fahrzeugspezifische Daten hinterlegt sind, erfolgt eine automatisierte Ausrichtung des ersten Targetelements 7 und des Monitors 8 sowie eine fahrzeugspezifische Positionierung der Targets 20. Ferner ist die Antriebseinheit 16 zur Ausrichtung der Anschlusselemente 12, 13 zueinander über die Sende- und Empfangseinheit 21 mit dem mobilen Handgerät 22 verbunden.

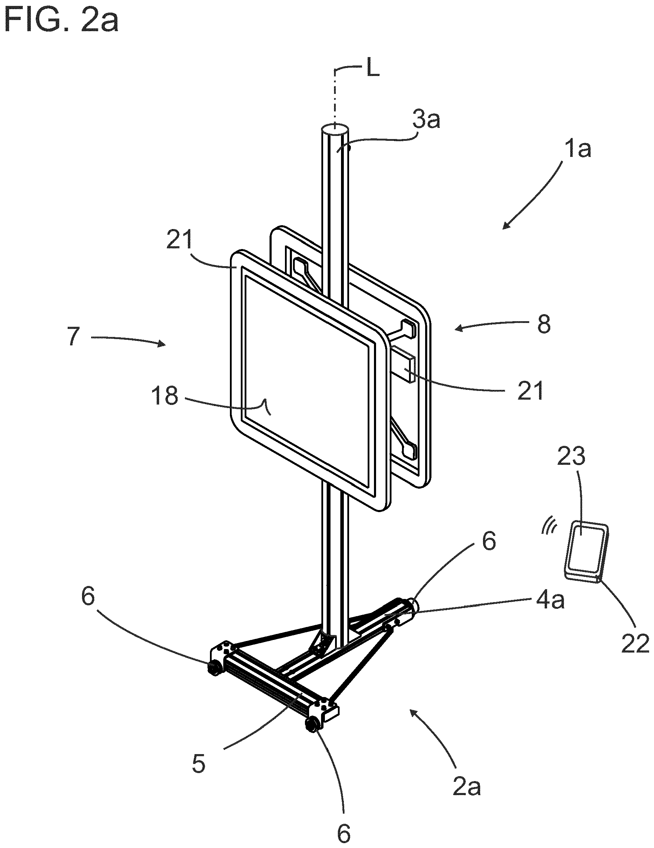

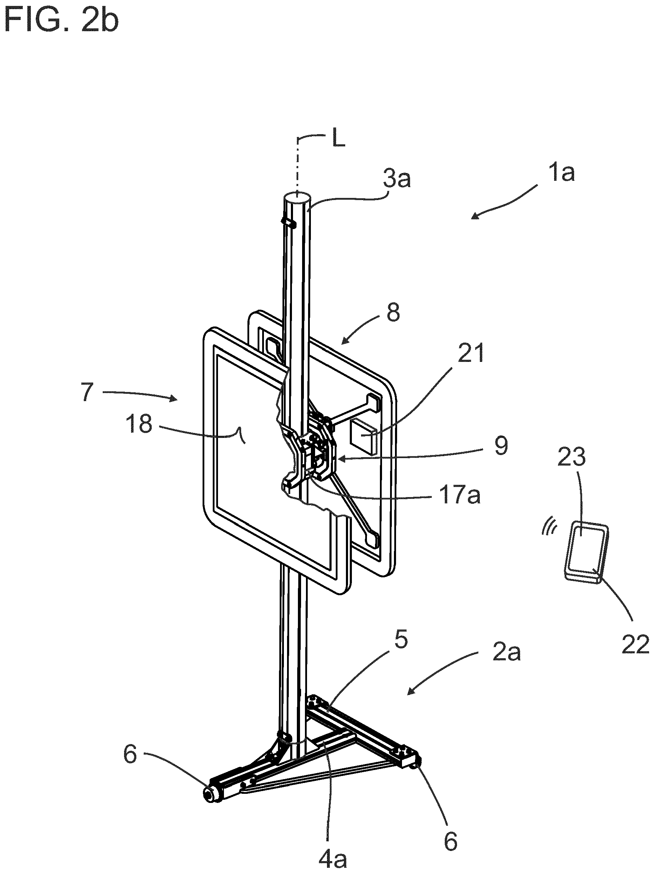

Für die in Fig. 2a und Fig. 2b dargestellte Kalibriereinheit 1a, die eine zweite Ausführungsform der Kalibriereinheit 1 darstellt, werden für gleiche Bauteile gleiche Bezugszeichen verwendet. Die Kalibriereinheit 1a unterscheidet sich von der Kalibriereinheit 1 gemäß Fig. 1a und Fig. 1b durch drehgelenkig über ein Kopplungselement 17a an einer Säule 3a angeordnete Gelenkeinheiten 9. Die Säule 3a ist verdrehfest an dem Längsträger 4a der Bodeneinheit 2a angeordnet. Die Verdrehung des Kopplungselements 17a um die Längsachse L der Säule 3a bewirkt die Verstellung des ersten Targetelements 7 zwischen der in Fig. 2a dargestellten Gebrauchsposition und der in Fig. 2b dargestellten Lagerposition. Entsprechend bewirkt die Verdrehung des Kopplungselements 17a die Verstellung des Monitors 8 zwischen der in Fig. 2a dargestellten Lagerstellung und der in Fig 2b dargestellten Gebrauchsstellung.

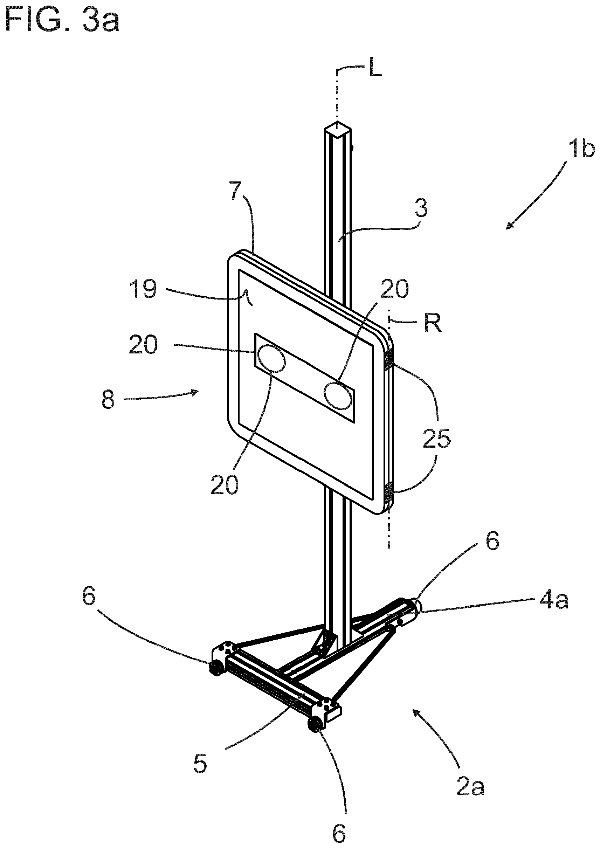

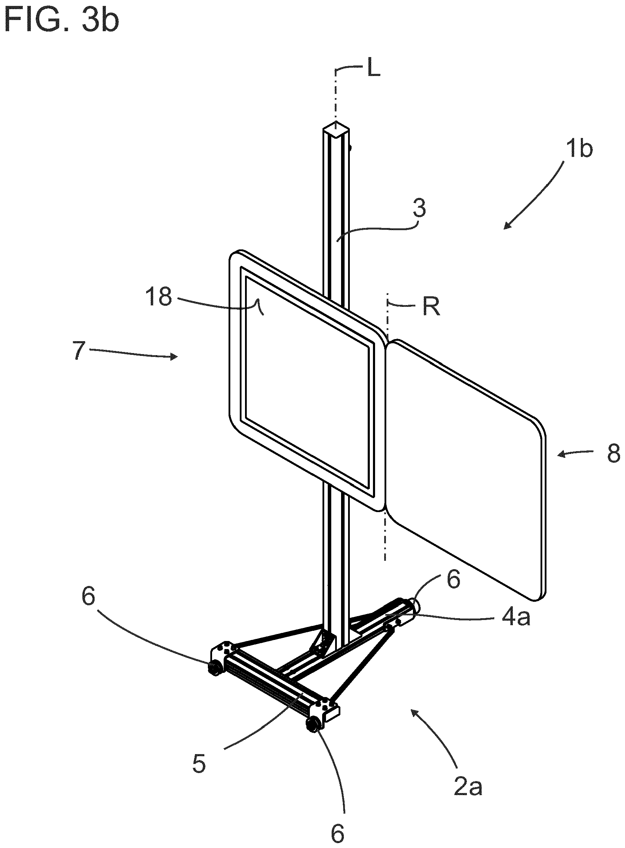

Für die in Fig. 3a und Fig. 3b dargestellte Kalibriereinheit 1b, die eine dritte Ausführungsform der Kalibriereinheit 1, 1a darstellt, werden für gleiche Bauteile gleiche Bezugszeichen verwendet. Die Kalibriereinheit 1b unterscheidet sich von der Kalibriereinheit 1 gemäß Fig. 1a und Fig. 1b und der Kalibriereinheit 1a gemäß Fig. 2a und Fig. 2b dadurch, dass der Monitor 8 an dem ersten Targetelement 7 um eine Rotationsachse R verschwenkbar ist. Hierzu ist der Monitor 8 an zwei Scharnieren 25 angeordnet und zwischen der in Fig. 3a dargestellten Gebrauchsstellung sowie der in Fig. 3b dargestellten Lagerstellung verstellbar.

Mit der Verstellbarkeit des ersten Targetelements 7 oder des Monitors 8 der Kalibriereinheit 1 wird eine flexible und zuverlässige Ausrichtung unterschiedlicher Fahrzeugumfelderfassungseinheiten eines oder verschiedener Kraftfahrzeuge ermöglicht.

Alle in Verbindung mit einzelnen Ausführungsformen der Erfindung erläuterten Merkmale können in unterschiedlicher Kombination für die Kalibriereinheit 1, 1a, 1b vorgesehen sein, um deren vorteilhafte Wirkungen zu realisieren, auch wenn diese zu unterschiedlichen Ausführungsformen beschrieben worden sind. So kann beispielsweise eine drehbar an der Bodeneinheit 2 gelagerte Säule 3a derart mit einem um die Säule 3a verdrehbaren Kopplungselement 17a verbunden sein, dass das erste Targetelement 7 und der Monitor 8 zunächst über die verdrehbare Säule 3a grob und daraufhin über das verdrehbare Kopplungselement 17a fein ausgerichtet werden.

Der Schutzbereich der vorliegenden Erfindung ist durch die Ansprüche gegeben und wird durch die in der Beschreibung erläuterten oder in den Figuren gezeigten Merkmale nicht beschränkt.

### Bezugszeichenliste

- 1, 1a, 1b: Kalibriereinheit
- 2, 2a: Bodeneinheit
- 3, 3a: Trageinheit/Säule
- 4, 4a: Längsträger
- 5: Querträger
- 6: Rollen
- 7: erstes Targetelement
- 8: zweites Targetelement/ Monitor
- 9: Gelenkeinheit
- 10: erste Gelenkachse
- 11: zweite Gelenkachse
- 12: erstes Anschlusselement
- 13: Gelenkkörper
- 14: zweites Anschlusselement
- 15: Linearantrieb
- 16: Antriebseinheit
- 17, 17a: Kopplungselement
- 18: Reflexionsfläche
- 19: Funktionsfläche
- 20: Target
- 21: Sende- und Empfangseinheit
- 22: mobiles Handgerät
- 23: elektronisches Display
- 24: Bodenplatte
- 25: Scharnier
- L: Längsachse der Säule
- R: Rotationsachse

## Patentansprüche

1. Kalibriereinheit zur Ausrichtung von Fahrzeugumfelderfassungseinheiten eines Kraftfahrzeugs, mit
- einer verschiebbar auf einem Untergrund aufstellbaren Bodeneinheit (2,2a),
- einer mit der Bodeneinheit (2, 2a) verbundenen Trageinheit (3, 3a) und
- einem verstellbar an der Trageinheit (3, 3a) angeordneten ersten Targetelement (7) mit einer Reflexionsfläche (18),
**gekennzeichnet durch** ein verstellbar an der Trageinheit (3, 3a) und/oder dem ersten Targetelement (7) angeordnetes zweites Targetelement (8) mit einer Funktionsfläche (19) zur Anzeige eines frei auf der Funktionsfläche (19) positionierbaren Targets (20), wobei das zweite Targetelement (8) zwischen
- einer die Reflexionsfläche (18) überdeckenden Gebrauchsstellung und
- einer die Reflexionsfläche (18) freigebenden Lagerstellung verstellbar ist.

2. Kalibriereinheit nach Anspruch 1, **dadurch gekennzeichnet, dass** das zweite Targetelement (8) zur Verstellung zwischen der Gebrauchsstellung und der Lagerstellung um eine in oder parallel zu der Längsachse (L) der Trageinheit (3, 3aa) angeordnete Rotationsachse (R) verschwenkbar ist.

3. Kalibriereinheit nach einem oder mehrerer der vorhergehenden Ansprüche, **dadurch gekennzeichnet, dass** das erste Targetelement (7) zwischen einer der Lagerstellung des zweiten Targetelements (8) zugeordneten Gebrauchsposition und einer der Gebrauchsstellung des zweiten Targetelements (8) zugeordneten Lagerposition verstellbar ist.

4. Kalibriereinheit nach einem oder mehrerer der vorhergehenden Ansprüche, **dadurch gekennzeichnet, dass** das erste Targetelement (7) und/oder das zweite Targetelement (8) um die Längsachse (L) der Trageinheit (3, 3a) verschwenkbar sind.

5. Kalibriereinheit nach einem oder mehrerer der vorhergehenden Ansprüche, **dadurch gekennzeichnet, dass** die Trageinheit (3, 3a) derart an der Bodeneinheit (2) gelagert ist, dass das erste Targetelement (7) zwischen der Lagerposition und der Gebrauchsposition und/oder das zweite Targetelement (8) zwischen der Gebrauchsstellung und der Lagerstellung durch eine Verdrehung der Trageinheit (3, 3a) um die Längsachse (L) der Trageinheit (3, 3a) verstellt werden.

6. Kalibriereinheit nach einem oder mehrerer der vorhergehenden Ansprüche, **gekennzeichnet durch** mindestens eine Gelenkeinheit (9) zur Positionierung des ersten Targetelements (7) und/oder des zweiten Targetelements (8) gegenüber der Trageinheit (3, 3a).

7. Kalibriereinheit nach einem oder mehrerer der vorhergehenden Ansprüche, **dadurch gekennzeichnet, dass** die Gelenkeinheit (9) zur Verschwenkung des ersten Targetelements (7) und/oder zweiten Targetelements (8) drehgelenkig an der Trageinheit (3, 3a) angeordnet ist.

8. Kalibriereinheit nach einem oder mehrerer der vorhergehenden Ansprüche, **dadurch gekennzeichnet, dass** die Gelenkeinheit (9) mit einem längsverstellbar an einem Träger der Trageinheit (3) angeordneten Kopplungselement (17, 17a) verbunden ist.

9. Kalibriereinheit nach einem oder mehrerer der vorhergehenden Ansprüche, **dadurch gekennzeichnet, dass** das Kopplungselement (17, 17a) derart ausgebildet ist, dass die Gelenkeinheit (9) zur Verstellung des ersten Targetelements (7) zwischen der Lagerposition und der Gebrauchsposition und/oder des zweiten Targetelements (8) zwischen der Gebrauchsstellung und der Lagerstellung um die Längsachse (L) der Trageinheit (3, 3a) verschwenkt wird.

10. Kalibriereinheit nach einem oder mehrerer der vorhergehenden Ansprüche, **dadurch gekennzeichnet, dass** das zweite Targetelement als Monitor (8) ausgebildet ist, wobei der Monitor (8) bevorzugt als LCD-, Plasma-, TFT- oder OLED-Monitor ausgebildet ist.
